# EUROPÄISCHE PATENTSCHRIFT

(11) **EP 3 339 713 B1**
(45) Veröffentlichungstag und Bekanntmachung des Hinweises auf die Patenterteilung: **16.10.2019**
(21) Anmeldenummer: 16306805.9
(22) Anmeldetag: 23.12.2016
(51) Int. Cl.: F16L 59/065, F16L 59/14, F16L 59/18, F17C 6/00, F16L 39/00

(54) **STECKKUPPLUNG FUER KRYOLEITUNGEN**
PLUG-IN COUPLING FOR CRYOGENIC LINES
ACCOUPLEMENT ENFICHABLE POUR CONDUITES CRYOGÉNIQUES

(43) Veröffentlichungstag der Anmeldung: 27.06.2018
(73) Patentinhaber: Nexans, 92400 Courbevoie (FR)
(72) Erfinder: SOIKA, Rainer, 30559 Hannover (DE); SCHULZ, Holger, 30165 Hannover (DE)
(74) Vertreter: Laget, Jean-Loup

(56) Entgegenhaltungen:
- EP-A2- 1 619 436
- EP-B1- 1 957 851
- JP-A- H07 208 684
- JP-U- S 536 923

## Beschreibung

Die Erfindung bezieht sich auf eine Steckkupplung für Kryoleitungen mit einer Kupplungsbuchse und einem Kupplungsstecker gemäß dem Oberbegriff des Patentanspruch 1.

Eine solche Steckkupplung geht beispielsweise aus der EP 1 957 851 B1 hervor.

Die Kupplungsbuchse und der Kupplungsstecker einer solchen Steckkupplung sind an einem Ende durch eine Flanschverbindung lösbar miteinander verbunden. Dieses Ende wird als "warmes" Ende bezeichnet, weil dieser Bereich im wesentlichen von der Umgebungstemperatur beeinflußt wird. Das Ende des Kupplungssteckers, das am weitesten in die Kupplungsbuchse hineinragt, wird als "kaltes" Ende bezeichnet. Ein Ringspalt zwischen den Kupplungselementen ist am "kalten" Ende durch eine Ringdichtung und am "warmen" Ende durch eine im Bereich der Flanschverbindung befindliche Ringdichtung abgedichtet. Eine derartige Kupplung wird auch als Johnston-Kupplung bezeichnet.

Johnston-Kupplungen werden allgemein in vakuumisolierten Leitungssystemen eingesetzt, welche zum Transport von kryogenen Medien verwendet werden. Die Elemente der Kupplung sind zweckmäßigerweise doppelwandig und vakuumisoliert ausgebildet. Dadurch wird eine größere räumliche Entfernung zwischen der Verbindungsstelle der beiden äußeren Kupplungselemente und der Stelle, an welcher der Übertritt des kryogenen Mediums von der einen in die andere Leitung erfolgt, geschaffen. Durch diese relativ große Entfernung zwischen dem "warmen" und "kalten" Ende der Kupplung soll die Wärmelast von Normal- zu kryogener Temperatur reduziert werden. Eine Vereisung der Kupplungsstelle und Verluste des kryogenen Mediums durch Verdampfung sollen dadurch verringert werden.

Bei einer solchen Kupplung wird der Kupplungsstecker auch als "Male-Teil" und die dazugehörige Kupplungsbuchse auch als "Female-Teil" bezeichnet.

Aus der eingangs erwähnten EP 1 957 851 B1 ist eine Steckkupplung für vakuumisolierte Leitungen nach Art einer Johnston-Kupplung bekannt. Eine vergleichbare Steckkupplung geht aus der JP S53 6923 U hervor. Die Kupplung hat jeweils eine Dichtung im "kalten" Bereich und im "warmen" Bereich der Steckkupplung. Die Dichtung im kalten Bereich kann aus Kunststoff, beispielsweise Polytetrafluorethylen (PTFE), oder aber aus Metall bestehen. Im warmen Bereich wird über eine O-Ringdichtung eine weitere Abdichtung erzeugt. Die trotz dieser Dichtungen in den Ringspalt eingedrungenen und dort eingeschlossenen kondensierten Fluide, beispielsweise am kalten Ende der Kupplung eingetretene kryogene Flüssigkeit, können beim Aufwärmen der Kupplung einen Überdruck im Ringspalt erzeugen, welcher von einem eingebauten Sicherheitsventil verhindert wird.

In horizontalen oder annähernd horizontalen Kupplungsanordnungen können die am kalten Ende im Ringspalt durch Kondensation gebildeten Flüssigkeiten zum warmen Ende fließen, wo sie verdampft werden. Der Dampf gelangt wiederum zum kalten Ende, wo er erneut kondensiert. Dieser Kreislauf der ständigen Phasenwechsel ist mit permanent eingebrachter und abgegebener latenter Wärme verbunden, was wiederum zu einem sehr großen thermischen Austausch mit der Umgebung und damit zum Vereisen der Außenseite der Kupplung führen kann. Dieser Effekt wird auch Wärmerohreffekt genannt. In vertikalen und bis zu etwa 45° geneigten Kupplungen treten diese unerwünschten Effekte nicht auf.

Der vorliegenden Erfindung liegt die Aufgabe zugrunde, eine lösbare Steckkupplung für Kryoleitungen bereitzustellen, die sich durch extrem geringe Verluste auszeichnet. Insbesondere sollen das Entstehen des Wärmerohreffekts und das Vereisen von Steckkupplungen verhindert werden.

Diese Aufgabe wird entsprechend dem kennzeichnenden Merkmal des Patentanspruchs 1 gelöst.

Die erfindungsgemäße Steckkupplung ist derart ausgelegt, dass bei horizontaler oder nahezu horizontaler Anordnung das Kondensat der Luft, welche beim Zusammenbau der Steckkupplung vorhanden ist, in dem Reservoir am kalten Ende der Kupplung gehalten wird. Das Kondensat kann somit nicht zum warmen Ende fließen und dort verdunsten, sodaß der Wärmerohreffekt verhindert wird. Dadurch können ein zu großer Wärmeaustausch mit der Umgebung und ein äußeres Vereisen der Kupplung vermieden werden. Das Reservoir ist so gestaltet, dass das gesamte kondensierte Fluid darin gehalten werden kann. Die Größe des Reservoirs ist demnach dem Volumen des Ringspaltes zwischen den Kupplungselementen angepaßt. Es ist deshalb auch möglich, Kupplungen mit größeren Ringspalten, die für bestimmte Anwendungen notwendig sind, vorzusehen, ohne dass die Kupplung durch den Wärmerohreffekt beeinträchtigt wird. Durch die Dichtungen am warmen und am kalten Ende der Steckkupplung wird das Eindringen von kryogener Flüssigkeit, Dampf oder Luft in den Ringspalt weitestgehend verhindert. Sollte dennoch kryogene Flüssigkeit durch eine defekte Dichtung am kalten Ende der Steckkupplung in den Ringspalt eindringen, so wird auch diese, zusätzlich zu dem Kondensat der Luft, in dem Reservoir gehalten und daran gehindert, zum warmen Ende der Kupplung zu fließen.

Weitere vorteilhafte Ausgestaltungen der Erfindung sind in den Unteransprüchen erfaßt.

Ausführungsbeispiele des Erfindungsgegenstandes sind in den Zeichnungen dargestellt.

Es zeigen:
Fig. 1 den Kupplungsstecker und die Kupplungsbuchse der erfindungsgemäßen Steckkupplung nach einer Ausführungsform vor dem Zusammenbau.
Fig. 2 die Steckkupplung in montiertem Zustand.

In den Zeichnungen beziehen sich gleiche Bezugszeichen auf gleiche technische Merkmale.

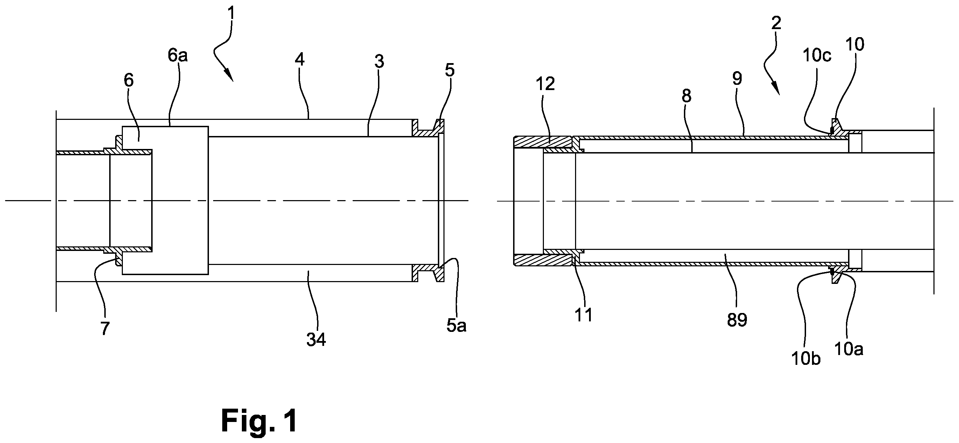

In Fig. 1 sind die beiden Kupplungselemente 1, 2 vor dem Zusammenbau dargestellt. Das Bezugszeichen 1 bezieht sich auf die Kupplungsbuchse bzw. das Female-Teil, wogegen das Bezugszeichen 2 auf den Kupplungsstecker bzw. das Male-Teil hinweist.

Die Kupplungsbuchse bzw. -dose 1 besteht aus einem inneren Rohrstück 3 und einem äußeren Rohrstück 4. Das innere und das äußere Rohrstück 3, 4 sind an ihrem Ende mit einem Flansch 5 vakuumdicht verschweißt. Der Innendurchmesser der Bohrung des Flansches 5 entspricht dem Innendurchmesser des inneren Rohrstücks 3. Die dem Flansch 5 abgekehrten Enden der Rohrstücke 3, 4 sind mit dem Innenrohr bzw. dem Außenrohr einer Kryoleitung bzw. einem Zuführstutzen einer Kühlanlage für das kryogene Medium vakuumdicht verschweißt (nicht dargestellt). Zwischen dem inneren Rohrstück 3 und dem äußeren Rohrstück 4 besteht ein evakuierter Ringspalt 34. Dieser Ringraum 34 ist mit dem evakuierten Raum der Kryoleitung verbunden bzw. endseitig abgeschottet.

Das innere Rohrstück 3 der Kupplungsbuchse 1 weist an ihrem dem Flansch abgekehrten Ende einen Bereich 6 mit einem gegenüber dem Rohrinnendurchmesser erweiterten Durchmesser auf. Dieser erweiterte Ringabschnitt 6 bildet ein Reservoir 6. Das Reservoir 6 hat an seinem dem Flansch 5 abgekehrten Ende ein Aufnahmeteil 7. Das Aufnahmeteil 7 ist ein Drehteil, welches den Übergang zwischen dem erweiterten Bereich 6 und der Kryoleitung bzw. dem Zuführstutzen bewirkt. Das Aufnahmeteil 7 hat einen in die Kupplungsbuchse 1 hineinragenden Vorsprung, welcher mit dem Ende des Kupplungssteckers 2 zusammenwirkt.

Der Kupplungsstecker 2 besteht aus einem inneren Rohrstück 8 und einem äußeren Rohrstück 9. Zwischen den Rohrstücken 8, 9 besteht ein evakuierter Ringspalt 89. Dieser evakuierte Ringraum 89 ist ebenfalls mit dem evakuierten Ringraum der Kryoleitung verbunden (nicht dargestellt).

Der innere Durchmesser des inneren Rohrstücks 3 der Kupplungsbuchse 1 ist geringfügig größer als der äußere Durchmesser des äußeren Rohrstücks 9 des Kupplungssteckers 2.

Ein Flansch 10 ist mit einem Ende des äußeren Rohrstücks 9 des Male-Teils 2 bzw. Kupplungssteckers vakuumdicht verschweißt. Die dem Flansch 10 abgekehrten Enden des inneren Rohrstücks 8 und des äußeren Rohrstücks 9 sind jeweils mit einem Aufnahmeteil 11 vakuumdicht verschweißt. Das Aufnahmeteil 11 weist einen rohrförmigen Vorsprung 11a auf, auf welchem ein Dichtring 12 angeordnet ist. Der Dichtring 12 kann beispielsweise aus PTFE bestehen. Anstatt eines PTFE-Dichtrings kann auch eine C-Ring-Dichtung zum Einsatz kommen.

Der Flansch 10 weist eine um die Flanschfläche umlaufende Ringnut 10a mit einem darin befindlichen Dichtring 10b auf. Der Flansch 10 hat außerdem einen rohrförmigen Ansatz 10c. Der Flansch 5 der Kupplungsbuchse 1 zeigt in seiner inneren Bohrung eine Durchmessererweiterung 5a, in welche der rohrförmige Ansatz 10c des Flansches 10 einführbar ist. Durch den Einsatz des Ansatzes 10c in die Durchmessererweiterung 5a werden die beiden Kupplungsteile 1, 2 beim Zusammenbau zueinander zentriert.

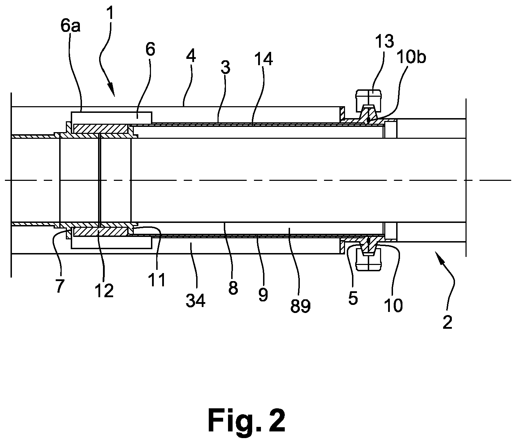

Fig. 2 zeigt die Steckkupplung im montierten Zustand. Die beiden Flansche 5, 10 sind mit einer Spannkette 13 verbunden. Anstatt der dargestellten Spannkette 13 kann auch eine andere Verklammerung der Flansche 5, 10, beispielsweise eine Schelle, verwendet werden. Alternativ können die Flansche 5, 10 mit Bohrungen versehen und mit Schrauben oder Bolzen verbunden werden. Der Dichtring 12 schrumpft durch die tiefe Temperatur am kalten Ende der Kupplung 1 auf die beiden Aufnahmeteile 7, 11 auf und dichtet damit den zwischen dem Kupplungsstecker 2 und der Kupplungsdose 1 befindlichen Ringspalt 14 gegenüber dem Innenraum der Kryoleitung ab. Falls anstatt des dargestellten Dichtrings 12 eine C-Ring-Dichtung verwendet wird, so muss diese durch eine ständig in längsaxialer Richtung wirkende Kraft vorgespannt werden. Am entgegengesetzten Ende ist der Ringspalt 14 ebenfalls durch den Dichtring 10b abgedichtet.

Im montierten Zustand bildet das Reservoir 6 eine Erweiterung des Ringspaltes 14 zwischen den beiden Kupplungselementen 1, 2 am kalten Ende des Kupplungssteckers. In dem Ringspalt 14 kondensiertes Fluid (beispielsweise Luft oder kryogenes Medium) kann, bei einer horizontal angeordneten Steckkupplung, in dem Reservoir 6 am kalten Ende der Kupplung gehalten werden. Die Flüssigkeit wird somit davon abgehalten, zu dem warmen Ende zu fließen. Das Reservoir 6 ist so ausgeführt, dass die gesamte kondensierte Flüssigkeit darin gehalten werden kann. Dafür wird beispielsweise das Luftvolumen, das während des Zusammenbaus der Kupplung in dem Ringspalt vorhanden ist, und das daraus resultierende Flüssigkeitsvolumen berücksichtigt. Das Volumenverhältnis zwischen gasförmiger Luft und flüssiger Luft ist annähernd 750. Für ein Luftvolumen von beispielsweise 1500 ml muss das Reservoir 6 demnach rund 2 ml Flüssigkeit aufnehmen können. Für einen Außendurchmesser des Male-Teils 2 von ca. 142 mm, einen Innendurchmesser des Female-Teils 1 von etwa 150 mm und eine innere Länge der Johnston-Kupplung einschließlich der Länge des Reservoirs 6 von etwa 800 mm, ergeben sich beispielsweise ein Innendurchmesser des Reservoirs 6 von ca. 154 mm und eine Länge des Reservoirs von ca. 50 mm, damit 2 ml Kondensat aufgenommen werden können. Innenrohrdurchmesser von 20 mm oder 50 mm der zu verbindenden Kryoleitungen bedeutet dies beispielsweise, dass das Reservoir 6 einen etwa 2-4 mm größeren Durchmesser als innere Rohrstück 3 hat und sich etwa 5-20 mm entlang der Kupplung erstreckt. Der Ringabschnitt 6 mit dem erweiterten Durchmesser hat vorteilhafterweise eine Länge, die so gewählt ist, dass sich das Reservoir 6 nicht bis in den warmen Bereich der Kupplung 1 erstreckt, damit die Flüssigkeit, die sich im Reservoir 6 angesammelt hat, nicht verdampft.

In der in den Fig. 1 und 2 dargestellten Ausführungsform hat das Reservoir einen Boden 6a, der im Längsschnitt gesehen eben ist, sodass das Reservoir 6 relativ zu dem restlichen Buchseninnenrohr 3 konzentrisch angeordnet ist. Der Durchmesser des Reservoirs 6 ist über den gesamten Ringabschnitt konstant. Nach anderen, nicht dargestellten Ausführungsformen kann der Boden des Reservoirs auch eine konkave Form oder eine konische, zum kalten Ende hin erweiterte Form haben (jeweils im Längsschnitt gesehen).

Die Erfindung ist beispielsweise anwendbar zur Verbindung von Leitungsrohren zum Transport von kryogenen Medien oder zur Verbindung zwischen einem Supraleiterkabelsystem und einem Endenabschluß. Ein besonders bevorzugter Anwendungsbereich ist die Verbindung von horizontalen Transportleitungen von kryogenen Medien.

## Patentansprüche

1. Steckkupplung für Kryoleitungen mit einer Kupplungsbuchse (1) und einem Kupplungsstecker (2), zur Verwendung in horizontalen oder annähernd horizontalen Kupplungsanordnungen, bei welcher die Kupplungsbuchse (1) und der Kupplungsstecker (2) jeweils aus einem inneren Rohrstück (3,8) und einem äußeren Rohrstück (4,9) bestehen, wobei die Kupplungsbuchse (1) und der Kupplungsstecker (2) durch eine an ihrem als "warmes" Ende bezeichneten Ende befindliche Flanschverbindung (5,10) lösbar miteinander verbunden sind, bei welcher an einem anderen, als "kaltes" Ende bezeichnete Ende ein zwischen der Kupplungsbuchse (1) und dem Kupplungsstecker (2) vorhandener Ringspalt (14) durch eine Ringdichtung (12) abgedichtet ist und bei welcher das "warme" Ende durch eine im Bereich der Flanschverbindung (5,10) befindliche Ringdichtung (10b) abgedichtet ist, **dadurch gekennzeichnet, dass** die Kupplungsbuchse (1) am "kalten" Ende ein Reservoir (6) aufweist, welches durch einen Ringabschnitt (6) mit einem gegenüber dem Durchmesser des inneren Rohrstücks (3) der Kupplungsbuchse (1) aufgeweiteten Durchmesser gebildet ist, so dass eine Erweiterung des Ringspaltes (14) gebildet wird.

2. Steckkupplung nach Anspruch 1, **dadurch gekennzeichnet, dass** das Reservoir (6) einen im Längsschnitt ebenen Boden (6a) aufweist, sodass das Reservoir (6) relativ zu dem restlichen inneren Rohrstück (3) konzentrisch angeordnet ist.

3. Steckkupplung nach Anspruch 1 oder 2, **dadurch gekennzeichnet, dass** der Ringabschnitt (6) einen konstanten Durchmesser hat.

4. Steckkupplung nach Anspruch 1 oder 2, **dadurch gekennzeichnet, dass** das Reservoir (6) einen im Längsschnitt konkaven Boden aufweist.

5. Steckkupplung nach Anspruch 1 oder 2, **dadurch gekennzeichnet, dass** der Boden des Reservoirs (6) eine im Längsschnitt konische, zum "kalten" Ende hin erweiterte Form aufweist.

## Claims

1. A plug-in coupling for cryogenic lines having a coupling socket (1) and a coupling plug (2), for use in horizontal or approximately horizontal coupling arrangements, in which the coupling socket (1) and the coupling plug (2) in each case consist of an inner tube piece (3, 8) and an outer tube piece (4, 9), wherein the coupling socket (1) and the coupling plug (2) are detachably connected to one another by a flange connection (5, 10) located at its end referred to as the "warm" end, in which at another end referred to as the "cold" end an annular gap (14) present between the coupling socket (1) and the coupling plug (2) is sealed by an annular seal (12) and in which the "warm" end is sealed by an annular seal (10b) located in the area of the flange connection (5, 10), **characterized in that** the coupling socket (1) has a reservoir (6) at the "cold" end, which is formed by an annular section (6) with an enlarged diameter relative to the diameter of the inner tube piece (3) of the coupling socket (1), so that an enlargement of the annular gap (14) is formed.

2. The plug-in coupling according to Claim 1, **characterized in that** the reservoir (6) has a flat bottom (6a) in the longitudinal section, so that the reservoir (6) is arranged concentrically relative to the remaining inner tube piece (3).

3. The plug-in coupling according to Claim 1 or 2, **characterized in that** the annular section (6) has a constant diameter.

4. The plug-in coupling according to Claim 1 or 2, **characterized in that** the reservoir (6) has a concave bottom in the longitudinal section.

5. The plug-in coupling according to Claim 1 or 2, **characterized in that** the bottom of the reservoir (6) has a shape enlarged conically toward the "cold" end in the longitudinal section.

## Revendications

1. Accouplement par fiche pour conduites cryogéniques, avec un raccord femelle d'accouplement (1) et un connecteur mâle d'accouplement (2), pour une utilisation dans des ensembles d'accouplement horizontaux ou à peu près horizontaux, dans lequel le raccord femelle d'accouplement (1) et le connecteur mâle d'accouplement (2) se composent respectivement d'une pièce tubulaire intérieure (3, 8) et d'une pièce tubulaire extérieure (4, 9), dans lequel le raccord femelle d'accouplement (1) et le connecteur mâle d'accouplement (2) sont raccordés l'un à l'autre de façon détachable par un raccordement par bride (5, 10) situé à leur extrémité désignée en tant qu'extrémité « chaude », dans lequel, à une autre extrémité désignée en tant qu'extrémité « froide », un interstice annulaire (14) présent entre le raccord femelle d'accouplement (1) et le connecteur mâle d'accouplement (2) est rendu étanche par un joint d'étanchéité annulaire (12), et dans lequel l'extrémité « chaude » est rendue étanche par un joint d'étanchéité annulaire (10b) situé dans la zone du raccordement par bride (5, 10), **caractérisé en ce que** le raccord femelle d'accouplement (1) comporte à l'extrémité « froide » un réservoir (6) qui est formé par un tronçon annulaire (6) avec un diamètre agrandi par rapport au diamètre de la pièce tubulaire intérieure (3) du raccord femelle d'accouplement (1) de telle sorte qu'un élargissement de l'interstice annulaire (14) est formé.

2. Accouplement par fiche selon la revendication 1, **caractérisé en ce que** le réservoir (6) comporte un fond (6a) plan en coupe longitudinale de telle sorte que le réservoir (6) est disposé de façon concentrique relativement à la pièce tubulaire intérieure (3) restante.

3. Accouplement par fiche selon la revendication 1 ou 2, **caractérisé en ce que** le tronçon annulaire (6) a un diamètre constant.

4. Accouplement par fiche selon la revendication 1 ou 2, **caractérisé en ce que** le réservoir (6) a un fond concave en coupe longitudinale.

5. Accouplement par fiche selon la revendication 1 ou 2, **caractérisé en ce que** le fond du réservoir (6) présente une forme conique en coupe longitudinale, élargie en direction de l'extrémité « froide ».
